# EUROPEAN PATENT SPECIFICATION

(11) **EP 0 940 238 B1**
(45) Date of publication and mention of the grant of the patent: **01.12.2004**
(21) Application number: 99104485.0
(22) Date of filing: 05.03.1999
(51) Int. Cl.: B29B 9/16, B29B 9/06

(54) **Method of conferring antipacking properties to a polymer material in granules**
Verfahren um Kunststoffgranulat agglomerationsverhindernde Eigenschaften zu verleihen
Procédé pour attribuer des propriétés anti-agglomérantes à des granules en matière plastique

(30) Priority: 06.03.1998 IT TO980189
(43) Date of publication of application: 08.09.1999
(73) Proprietor: Kemi S.r.l., 28060 S. Pietro Mosezzo (IT)
(72) Inventor: Pigni,Ambrogio, 20020 Arese (IT)
(74) Representative: Cerbaro, Elena, Dr.

(56) References cited:
- DE-A- 1 911 708
- US-A- 4 419 253
- DATABASE WPI Section Ch, Week 198428 Derwent Publications Ltd., London, GB; Class A35, AN 1984-175975 XP002131899 & SU 1 052 424 A (TYRE IND RES INST), 7 November 1983 (1983-11-07)
- KIRK-OTHMER: "ENCYCLOPEDIA OF CHEMICAL TECHNOLOGY" 1989 , JOHN WILEY , NEW YORK XP002131898 160950 THIRD EDITION VOLUME 9 * page 798-805 * * table 3 *
- DATABASE WPI Section Ch, Week 197639 Derwent Publications Ltd., London, GB; Class H07, AN 1976-72772X XP002131900 & JP 50 062210 A (TOYO RIKEN KOGYO KK), 28 May 1975 (1975-05-28)

## Description

The present invention relates to a method of conferring antipacking properties to a polymer material in granules, and to antipacking compositions suitable for use in such a method.

Numerous polymer materials are produced and subsequently processed in the form of granules.

Polymer materials in granules may be produced, for example, by extrusion, and by subsequently cutting the continuous material issuing from the extruder - typically by means of a cutting system skimming the head of the die. In particular, numerous polymer materials, including moldable thermoplastic elastomers, are produced by finely dry mixing various polymers, which are then homogenized by hot processing in an extruder and formed into granules by a cutter on the head of the extruder. The polymer material is then cooled and packaged ready for further processing.

A common problem in processes of this sort is the tendency of the granules of polymer material issuing from the extruder to pack together, mainly due to the nature of the polymer material, and which is further compounded by the still relatively high temperature of the material.

Packing of the granules may be reduced by cooling the polymer material issuing from the extruder, e.g. by blowing air or spraying water onto the material before or as it is cut into granules, or by cutting the material in a bath of cooling liquid. In most cases, however, cooling alone is not enough to entirely eliminate the packing phenomenon.

To prevent the granules adhering into large masses (which create difficulties at later processing stages of the material), the granules issuing from the cutter are also treated with appropriate antipacking products. At present, this is done using products which, though highly effective in keeping the granules separate, are only available in the form of powder.

Treating granules of polymer material with powdered antipacking agents involves all the drawbacks typically associated with the use of powders, especially in terms of environmental pollution and application difficulties. In particular, to prevent the powder from dispersing in the workplace and so endangering the workers' health, the granules must be treated in closed chambers, which means more complex, high-cost production lines, also because the same chamber must also house the cooling systems and the device for converting the material into granules. And despite this, the powder pollution problem is again encountered at follow-up processing stages of the polymer granules (e.g. during molding).

What is more, to achieve the desired antipacking effect, relatively large quantities of powder are normally required, on account of only part of the powder actually adhering to the granules at each application, the rest having to be collected, thus further complicating the system.

Some currently used antipacking products also give the granules a whitish appearance, which is not always acceptable.

SU 1052424 as reported in Derwent Database WPI under XP-002131899 discloses anti-adherence compositions comprising fatty acids (of the type disclosed in "Encyclopaedia of Chemical Technology" - XP-002131898), saponifying agents, water and other components, among which solid water-insoluble components; use of such partly solid compositions may still present problems in both preparation and application steps.

It is an object of the present invention to provide a method of conferring antipacking properties to a polymer material in granules, designed to eliminate the aforementioned drawbacks. In particular, it is an object of the invention to provide a processing method which is straightforward and cheap to implement, and which does not give rise to problems of environmental pollution, especially as regards dispersion of powders in the workplace.

It is a further object of the invention to provide an antipacking composition suitable for use in such a method, and designed to eliminate the drawbacks typically associated with traditional antipacking products in powder form.

According to the present invention, there is provided a method of treating polymer materials in granules, to confer antipacking properties to said granules, as recited in enclosed claim 1.

More specifically, at said step of preparing said liquid antipacking composition, at least one saponifying agent and at least one saturated and/or unsaturated fatty acid with over 10 carbon atoms are mixed to form said at least one saponification product. Preferably, at said step of preparing said liquid antipacking composition, at least one saponifying agent and a mixture of saturated and/or unsaturated fatty acids with over 10 carbon atoms are mixed to form respective saponification products of said fatty acids.

Moreover, at said step of preparing said liquid antipacking composition, said at least one saponification product is preferably diluted in water to concentrations ranging between 10% and 40% by weight.

According to a preferred embodiment, said predetermined quantity of said liquid antipacking composition sprayed onto said granules at said spraying step ranges in weight between 0.8% and 4.5% of the total weight of said granules. In other words, at said spraying step, a quantity of said at least one saponification product ranging in weight between 0.1% and 1% of the total weight of said granules is sprayed onto said granules by means of said liquid antipacking composition.

In the method according to the invention, the step of spraying said liquid antipacking composition onto said granules of polymer material may advantageously be performed simultaneously with a step of forming said polymer material into granules. For example, if said step of forming said polymer material into granules is performed by means of a cutting device located at an extrusion head for extruding said polymer material, said liquid antipacking composition may be sprayed onto said granules immediately downstream from said cutting device, at a temperature lower than the temperature at which said granules issue from said extrusion head, so that said granules are cooled by spraying with said liquid antipacking composition.

Whichever the case, said step of spraying said liquid antipacking composition onto said granules of polymer material may be followed by a further step of cooling said granules.

According to another aspect of the present invention, it relates to the use of a composition for conferring antipacking properties to a polymer material in granules, characterized in that said composition is a liquid composition consisting essentially of at least one saponification product of a fatty acid with at least one saponifying agent and at least one liquid solvent in which said at least one saponification product is dissolved.

In particular, said at least one fatty acid is a saturated or unsaturated fatty acid with over 10 carbon atoms.

According to a preferred embodiment, the composition according to the invention comprises respective saponification products of said at least one saponification agent with a mixture of saturated and/or unsaturated fatty acids with over 10 carbon atoms; said saponification products being dissolved to a predetermined concentration in said at least one liquid solvent.

Preferably, said at least one saponification product is dissolved in water to a concentration ranging between 10% and 40% by weight.

Preferably, said mixture of fatty acids comprises saturated fatty acids selected from the group comprising: dodecanoic acid, tetradecanoic acid, hexadecanoic acid, octadecanoic acid; and may also comprise at least one unsaturated fatty acid, such as unsaturated octadecenoic acid.

According to a preferred embodiment, the composition according to the invention is obtained from an aqueous solution comprising from about 1% to about 10% by weight - referred to the total weight of said aqueous solution - of saponifying agent; from about 1% to about 15% by weight of dodecanoic acid; from about 0.5% to about 4% by weight of tetradecanoic acid; from about 0.1% to about 1% by weight of hexadecanoic acid; from about 0.7% to about 7% by weight of octadecanoic acid; and from about 1% to about 10% by weight of unsaturated octadecenoic acid.

The saponifying agent may, for example, be selected from the group comprising: sodium hydroxide; potassium hydroxide; borax; primary, secondary or tertiary organic amines; amines with at least one hydroxyl group.

The method according to the invention therefore provides for conferring antipacking properties to a polymer material in granules in an extremely straightforward, low-cost manner, and with no powder involved, thus eliminating all the problems commonly posed by the use of powder, in particular, pollution by dispersion and the difficulties encountered in applying powdered products.

Using liquid antipacking compositions according to the invention, as opposed to traditional currently marketed antipacking products in powder form, therefore not only solves the powder problem at the granule production stage, but also at subsequent granule processing stages (from storage to conversion into finished products).

Moreover, according to the invention, consumption of the liquid antipacking composition is extremely low, and the composition spraying step is performed highly efficiently so that a large quantity of the antipacking product adheres to the granules (in any case, the sprayed liquid composition may be salvaged and recycled extremely easily).

If the antipacking treatment is performed simultaneously with cutting of the granules at the output of the extrusion head, spraying the liquid antipacking composition according to the invention also provides for effectively cooling the polymer material and so eliminating any further cooling.

In short, the Applicant's technicians have surprisingly observed that saponification products of fatty acids, unlike the fatty acids from which they are derived, provide for conferring excellent antipacking properties to granules of polymer material : an extremely straightforward, effective method of applying such products to granules of polymer material has therefore been devised.

The active principle, capable of conferring the desired antipacking properties to the granules of polymer material, of the compositions according to the invention is therefore defined by a soap of a fatty acid or by a mixture of soaps of fatty acids; which active principle is then appropriately diluted in a solvent (typically water) and sprayed onto the granules for treatment.

As is known, fatty acids are straight-chain carboxylic acids with 4 to 24 carbon atoms, and may be saturated or have one or more double bonds.

When treated in water with bases (e.g. sodium or potassium hydroxide), fatty acids produce commonly used alkaline salts such as soaps.

According to the invention, liquid antipacking compositions may comprise saponification products of different fatty acids, obtained using various basic saponifying agents such as: sodium hydroxide; potassium hydroxide; borax; primary, secondary or tertiary organic amines; amines with at least one hydroxyl group.

Various fatty acids may be mixed in various proportions. Excellent results have been obtained, for example, using mixtures of saturated fatty acids with an even number of carbon atoms from 12 to 18 (C12 dodecanoic acid, C14 tetradecanoic acid, C16 hexadecanoic acid, C18 octadecanoic acid) with or without the addition of at least one unsaturated acid (e.g. C18 octadecenoic acid). The absence of unsaturated fatty acids makes the compositions according to the invention also suitable for treating polymer material eventually used for producing food containers.

According to the invention, however, the formulation of the active principle (saponification product/s) may be modified by varying the type and relative quantities of the fatty acids used, and the quantity of saponifying agent.

The method according to the invention also provides for varying - also as a function of the nature of the polymer material to be treated and the operating conditions involved - the active principle concentration in water, and the composition quantity sprayed onto the polymer material (hence the active principle quantity applied).

In particular, excellent antipacking results have been obtained with 10 to 40% by weight concentrations of the active principle (saponification product/s). Higher active principle concentrations are obviously required for treating polymer materials with a greater intrinsic tendency to pack, or on particular production lines. Whichever the case, the desired antipacking effect may be achieved for practically any type of polymer by appropriately increasing the active principle concentration and/or the total quantity of solution used.

The present invention will now be described further by means of the following non-limiting embodiments.

### EXAMPLE 1

The method according to the invention was applied to a commercial, thermoplastic, elastomeric foam material to be calendered.

The elastomer was produced on a conventional production line comprising an extruder for homogenizing the polymer, and a cutter, located at the extrusion head and housed in a safety cage, for cutting the polymer into granules of predetermined size. A spray nozzle was fitted to the safety cage of the cutter, over the extrusion head, to spray a liquid antipacking composition in accordance with the invention onto the granules of polymer material immediately downstream from the cutting region.

In particular, an Airmix spray nozzle with a 0.8 mm diameter orifice was used; and the liquid antipacking composition was fed to the nozzle, from a tank maintained at 2 bar pressure, together with a stream of air at 3.5 bar pressure to obtain a good degree of atomization.

A liquid antipacking composition was used containing the active principle formulated in Table 1 (in which the percentages refer to the total weight of the undiluted active principle). The active principle was used in an aqueous solution with a 20% by weight concentration (i.e. 1:4 dilution of the active principle in water).

**TABLE 1**

| COMPONENT | TOTAL WEIGHT % |
|---|---|
| saponifying agent | 21 |
| dodecanoic acid (C12) | 32 |
| tetradecanoic acid (C14) | 10 |
| hexadecanoic acid (C16) | 3 |
| octadecanoic acid (C18) | 14 |
| octadecenoic acid (unsaturated) (C18) | 20 |

The production line provided for treating 800 kg/hour of polymer; and the quantity of aqueous antipacking solution sprayed onto the granules corresponded in weight to 0.83% of the total weight of the polymer treated (supplying the spray nozzle with 6.64 kg/hour) : this gave a consumption of concentrated composition (undiluted active principle) equal in weight to 0.16% of the total weight of the polymer treated.

Perfectly separate granules were obtained, which were then fed to a cyclone cooling system and stored with no incidence of packing phenomena.

The resulting granules were then tested to determine any negative effects of the antipacking treatment on subsequent processing. In particular, the treated granules were tested to determine a significant tendency to absorb ambient humidity. Specimens produced from the treated granules gave rise to no processing problems, either during calendering or molding.

### EXAMPLE 2

A production line similar to the one in Example 1 was used for the production and antipacking treatment of a polymer material in granules commonly used as a filler for electric cables. In this case, however, since the polymer being treated showed a greater tendency to pack, the extrusion head was provided with two nozzles for spraying the antipacking composition.

An aqueous antipacking solution was used containing the same active principle as in the previous Example (formulation shown in Table 1) but with a concentration of 33% by weight (1:2 dilution of the active principle in water).

800 kg/hour of polymer were treated using 12.8 kg/hour of diluted antipacking composition (corresponding to a solution percentage by weight of 1.6% of the total weight of the polymer treated). That is to say, an active principle percentage by weight of 0.55% of the total weight of the polymer treated was used.

In this case also, the resulting granules, cyclone cooled and stored, gave rise to no packing problems.

### EXAMPLE 3

Further tests were conducted of an elastomeric material similar to the one in Example 1, but substantially compact (as opposed to foam), and using a production line similar to the one in Example 1, but featuring a vibrating-screen, as opposed to cyclone, cooling system.

In this case also, an aqueous antipacking solution was used containing the same active principle as in the previous Examples (formulation in Table 1) diluted in water to a concentration of 25% by weight (1:3 dilution in water).

1000 kg/hour of polymer were treated using 10 kg/hour of aqueous antipacking solution (corresponding to a solution percentage by weight of 1% of the total weight of the polymer treated). That is to say, an active principle percentage by weight of 0.25% of the total weight of the polymer treated was used.

Perfectly separated granules were obtained; and tests of specimens produced from the treated polymer showed no problems at any processing stage, thus confirming that the method according to the invention produces no alteration of the treated materials.

### EXAMPLE 4

Further tests, as described in Examples 1 to 3, were conducted with further variations in dilution of the active principle described previously (formulation in Table 1). In particular, good antipacking effects were also achieved with concentrations of about 11% (1:8 dilution in water) and about 16.5% (1:5 dilution in water).

Higher active principle concentrations (up to 40%) were required to achieve a satisfactory antipacking effect of polymer materials with a marked intrinsic tendency to pack.

In other cases, to prevent packing of the granules, it was necessary to increase the supply of liquid antipacking composition and apply a solution percentage by weight of up to 5% of the total weight of the polymer treated (i.e. up to about 1% by weight of active principle).

### EXAMPLE 5

Finally, further tests (again substantially as described previously) were conducted varying the composition of the active principle used in the liquid antipacking solutions. In particular, changes were made to the quantities of saponifying agent with respect to the fatty acids, and to the quantities of individual acids, as shown in Table 2, in which the individual component percentages refer to the total weight of the liquid antipacking solution (diluted product).

Clearly, further changes may be made to the formulation of the active principle according to the invention, for example, by eliminating some of the fatty acids indicated, inserting others, or varying the relative quantities.

In particular, compositions with no unsaturated fatty acid soaps have been found suitable for treating polymer materials commonly used in the production of food containers.

**TABLE 2**

| COMPONENT | DILUTED SOLUTION COMPONENT TOTAL WEIGHT % |
|---|---|
| saponifying agent | 1 to 10 |
| dodecanoic acid (C12) | 1 to 15 |
| tetradecanoic acid (C14) | 0.5 to 4 |
| hexadecanoic acid (C16) | 0.1 to 1 |
| octadecanoic acid (C18) | 0.7 to 7 |
| octadecenoic acid (unsaturated) (C18) | 1 to 10 |

## Claims

1. A method of treating polymer materials in granules, to confer antipacking properties to said granules, **characterized by** comprising:
- a step of preparing a liquid antipacking composition, during which at least one saponification product of at least one fatty acid with a saponifying agent is dissolved to a predetermined concentration in a respective liquid solvent; said liquid antipacking composition consisting essentially of said at least one saponification product and the liquid solvent thereof; and
- a step of spraying a predetermined quantity of said liquid antipacking composition onto said granules of polymer material.

2. A method as claimed in Claim 1, **characterized in that**, at said step of preparing said liquid antipacking composition, at least one saponifying agent and at least one saturated and/or unsaturated fatty acid with over 10 carbon atoms are mixed to form said at least one saponification product.

3. A method as claimed in Claim 1 or 2, **characterized in that**, at said step of preparing said liquid antipacking composition, at least one saponifying agent and a mixture of saturated and/or unsaturated fatty acids with over 10 carbon atoms are mixed to form respective saponification products of said fatty acids.

4. A method as claimed in one of Claims 1 to 3, **characterized in that**, at said step of preparing said liquid antipacking composition, said at least one saponification product is diluted in water to concentrations ranging between 10% and 40% by weight.

5. A method as claimed in one of the foregoing Claims, **characterized in that** said predetermined quantity of said liquid antipacking composition sprayed onto said granules at said spraying step ranges in weight between 0.8% and 4.5% of the total weight of said granules.

6. A method as claimed in one of the foregoing Claims, **characterized in that**, at said spraying step, a quantity of said at least one saponification product ranging in weight between 0.1% and 1% of the total weight of said granules is sprayed onto said granules by means of said liquid antipacking composition.

7. A method as claimed in one of the foregoing Claims, **characterized in that** said step of spraying said liquid antipacking composition onto said granules of polymer material is performed simultaneously with a step of forming said polymer material into granules.

8. A method as claimed in Claim 7, **characterized in that** said step of forming said polymer material into granules is performed by means of a cutting device located at an extrusion head for extruding said polymer material; said liquid antipacking composition being sprayed onto said granules immediately downstream from said cutting device, at a temperature lower than the temperature at which said granules issue from said extrusion head, so that said granules are cooled by spraying with said liquid antipacking composition.

9. A method as claimed in Claim 8, **characterized in that** said step of spraying said liquid antipacking composition onto said granules of polymer material is followed by a further step of cooling said granules.

10. Use of a composition for conferring antipacking properties to a polymer material in granules, **characterized in that** said composition is a liquid composition consisting essentially of at least one saponification product of a fatty acid with at least one saponifying agent and at least one liquid solvent in which said at least one saponification product is dissolved.

11. Use as claimed in Claim 10, **characterized in that** said at least one fatty acid is a saturated or unsaturated fatty acid with over 10 carbon atoms; said saponifying agent being a basic agent.

12. Use as claimed in Claim 10 or 11, **characterized by** comprising respective saponification products of said at least one saponification agent with a mixture of saturated and/or unsaturated fatty acids with over 10 carbon atoms; said saponification products being dissolved to a predetermined concentration in said at least one liquid solvent.

13. Use as claimed in one of Claims 10 to 12, **characterized in that** said at least one saponification product is dissolved in water to a concentration ranging between 10% and 40% by weight.

14. Use as claimed in Claim 12 or 13, **characterized in that** said mixture of fatty acids comprises saturated fatty acids selected from the group comprising: dodecanoic acid, tetradecanoic acid, hexadecanoic acid, octadecanoic acid.

15. Use as claimed in Claim 14, **characterized in that** said mixture of fatty acids also comprises at least one unsaturated fatty acid, preferably octadecenoic acid.

16. Use as claimed in one of Claims 12 to 15, **characterized by** being obtained from an aqueous solution comprising from about 1% to about 10% by weight - referred to the total weight of said aqueous solution - of saponifying agent; from about 1% to about 15% by weight of dodecanoic acid; from about 0.5% to about 4% by weight of tetradecanoic acid; from about 0.1% to about 1% by weight of hexadecanoic acid; from about 0.7% to about 7% by weight of octadecanoic acid; and from about 1% to about 10% by weight of unsaturated octadecenoic acid.

17. Use as claimed in one of Claims 10 to 16, **characterized in that** said at least one saponifying agent is selected from the group comprising: sodium hydroxide; potassium hydroxide; borax; primary, secondary or tertiary organic amines; amines with at least one hydroxyl group.

## Patentansprüche

1. Verfahren zur Behandlung von Polymermaterialien in Granulatform, um dem Granulat agglomerationsverhindernde Eigenschaften zu verleihen, **dadurch gekennzeichnet, dass** es enthält:
- einen Schritt des Herstellens einer flüssigen Anti-Agglomerations-Zusammensetzung, während welchem mindestens ein Verseifungsprodukt mindestens einer Fettsäure mit einem Verseifungsmittel bis zu einer vorbestimmten Konzentration in einem jeweiligen flüssigen Lösemittel gelöst wird; wobei die flüssige Anti-Agglomerations-Zusammensetzung im wesentlichen aus dem mindestens einen Verseifungsprodukt und seinem flüssigen Lösemittel besteht; und
- einen Schritt des Sprühens einer vorbestimmten Menge der flüssigen Anti-Agglomerations-Zusammensetzung auf das Granulat des Polymermaterials.

2. Verfahren nach Anspruch 1, **dadurch gekennzeichnet, dass** in dem Schritt des Herstellens der flüssigen Anti-Agglomerations-Zusammensetzung mindestens ein Verseifungsmittel und mindestens eine gesättigte und/oder ungesättigte Fettsäure mit mehr als 10 Kohlenstoffatomen gemischt werden, um das mindestens eine Verseifungsprodukt zu bilden.

3. Verfahren nach Anspruch 1 oder 2, **dadurch gekennzeichnet, dass** in dem Schritt des Herstellens der flüssigen Anti-Agglomerations-Zusammensetzung mindestens ein Verseifungsmittel und ein Gemisch aus gesättigten und/oder ungesättigten Fettsäuren mit mehr als 10 Kohlenstoffatomen gemischt werden, um jeweilige Verseifungsprodukte der Fettsäuren zu bilden.

4. Verfahren nach einem der Ansprüche 1 bis 3, **dadurch gekennzeichnet, dass** in dem Schritt des Herstellens der flüssigen Anti-Agglomerations-Zusammensetzung das mindestens eine Verseifungsprodukt in Wasser auf Konzentrationen im Bereich zwischen 10 Gew.-% und 40 Gew.-% verdünnt wird.

5. Verfahren nach einem der vorstehenden Ansprüche, **dadurch gekennzeichnet, dass** die vorbestimmte Menge der flüssigen Anti-Agglomerations-Zusammensetzung, die in dem Sprühschritt auf das Granulat gesprüht wird, in einem Bereich zwischen 0,8 Gew.-% und 4,5 Gew.-% des Gesamtgewichts des Granulats liegt.

6. Verfahren nach einem der vorstehenden Ansprüche, **dadurch gekennzeichnet, dass** in dem Sprühschritt eine Menge des mindestens einen Verseifungsprodukts in einem Bereich zwischen 0,1 Gew.-% und 1 Gew.-% des Gesamtgewichts des Granulats mittels der Anti-Agglomerations-Zusammensetzung auf das Granulat gesprüht wird.

7. Verfahren nach einem der vorstehenden Ansprüche, **dadurch gekennzeichnet, dass** der Schritt des Sprühens der flüssigen Anti-Agglomerations-Zusammensetzung auf das Granulat aus Polymermaterial gleichzeitig mit einem Schritt des Formens des Polymermaterials zu Granulat durchgeführt wird.

8. Verfahren nach Anspruch 7, **dadurch gekennzeichnet, dass** der Schritt des Formens des Polymermaterials zu Granulat mittels einer Schneideinrichtung ausgeführt wird, die an einem Strangpresskopf zum Strangpressen des Polymermaterials angeordnet ist; wobei die flüssige Anti-Agglomerations-Zusammensetzung unmittelbar stromabwärts der Schneideinrichtung auf das Granulat gesprüht wird, und zwar mit einer Temperatur, die niedriger ist als die Temperatur, mit der das Granulat aus dem Strangpresskopf austritt, sodass das Granulat durch das Besprühen mit der flüssigen Anti-Agglomerations-Zusammensetzung gekühlt wird.

9. Verfahren nach Anspruch 8, **dadurch gekennzeichnet, dass** der Schritt des Aufsprühens der flüssigen Anti-Agglomerations-Zusammensetzung auf das Granulat des Polymermaterials von einem weiteren Schritt des Kühlens des Granulats gefolgt ist.

10. Verwendung einer Zusammensetzung, die einem Polymermaterial in Granulatform Anti-Agglomerationseigenschaften verleiht, **dadurch gekennzeichnet, dass** die Zusammensetzung eine flüssige Zusammensetzung ist, die im wesentlichen aus mindestens einem Verseifungsprodukt einer Fettsäure mit mindestens einem Verseifungsmittel und mindestens einem flüssigen Lösemittel besteht, in dem das mindestens eine Verseifungsprodukt gelöst ist.

11. Verwendung nach Anspruch 10, **dadurch gekennzeichnet, dass** die mindestens eine Fettsäure eine gesättigte oder ungesättigte Fettsäure mit mehr als 10 Kohlenstoffatomen ist; wobei das Verseifungsmittel ein basisches Mittel ist.

12. Verwendung nach Anspruch 10 oder 11, **gekennzeichnet durch** das Enthalten von jeweiligen Verseifungsprodukten des mindestens einen Verseifungsmittels mit einem Gemisch von gesättigten und/oder ungesättigten Fettsäuren mit mehr als 10 Kohlenstoffatomen; wobei die Verseifungsprodukte bis zu einer vorbestimmten Konzentration in dem mindestens einen flüssigen Lösemittel gelöst sind.

13. Verwendung nach einem der Ansprüche 10 bis 12, **dadurch gekennzeichnet, dass** das mindestens eine Verseifungsprodukt in Wasser auf eine Konzentration im Bereich zwischen 10 Gew.-% und 40 Gew.-% gelöst ist.

14. Verwendung nach Anspruch 12 oder 13, **dadurch gekennzeichnet, dass** das Gemisch von Fettsäuren gesättigte Fettsäuren enthält, die ausgewählt sind aus der Gruppe, die enthält: Dodecansäure, Tetradecansäure, Hexadecansäure, Octadecansäure.

15. Verwendung nach Anspruch 14, **dadurch gekennzeichnet, dass** das Gemisch von Fettsäuren ferner mindestens eine ungesättigte Fettsäure enthält, vorzugsweise Octadecensäure.

16. Verwendung nach einem der Ansprüche 12 bis 15, **dadurch gekennzeichnet, dass** sie mit einer wässrigen Lösung erzielt wird, die von etwa 1 Gew.-% bis etwa 10 Gew.-% - bezogen auf das Gesamtgewicht der wässrigen Lösung - Verseifungsmittel enthält; von etwa ein 1 Gew.-% bis etwa 15 Gew.-% Dodecansäure; von etwa 0,5 Gew.-% bis etwa 4 Gew.-% Tetradecansäure; von etwa 0,1 Gew.-% bis etwa 1 Gew.-% Hexadecansäure; von etwa 0,7 Gew.-% bis etwa 7 Gew.-% Octadecansäure; und von etwa 1 Gew.-% bis etwa 10 Gew.-% ungesättigte Octadecensäure.

17. Verwendung nach einem der Ansprüche 10 bis 16, **dadurch gekennzeichnet, dass** das mindestens eine Verseifungsmittel ausgewählt ist aus der Gruppe, die enthält: Natriumhydroxid; Kaliumhydroxid; Borax; primäre, sekundäre oder tertiäre organische Amine; Amine mit mindestens einer Hydroxylgruppe.

## Revendications

1. Procédé de traitement de polymères en granulés, pour conférer des propriétés anti-agglomérantes aux dits granulés, **caractérisé en ce qu'**il comprend :
une étape de préparation d'une composition liquide anti-agglomérante, pendant laquelle au moins un produit de saponification d'au moins un acide gras avec un agent de saponification est dissout à une concentration prédéterminée dans un solvant liquide correspondant ; ladite composition anti-agglomérante étant principalement constituée par ledit au moins un produit de saponification et le solvant liquide de celui-ci ; et
une étape de pulvérisation d'une quantité prédéterminée de ladite composition liquide anti-agglomérante sur lesdits granulés de polymère.

2. Procédé selon la revendication 1, **caractérisé en ce que**, à ladite étape de préparation de ladite composition liquide anti-agglomérante, au moins un agent de saponification et au moins un acide gras saturé et/ou insaturé avec plus de 10 atomes de carbone sont mélangés pour former ledit au moins un produit de saponification.

3. Procédé selon la revendication 1 ou 2, **caractérisé en ce que**, à ladite étape de préparation de ladite composition liquide anti-agglomérante, au moins un agent de saponification et un mélange d'acides gras saturés et/ou insaturés avec plus de 10 atomes de carbone sont mélangés pour former des produits de saponification correspondants desdits acides gras.

4. Procédé selon la revendication 1 à 3, **caractérisé en ce que**, à ladite étape de préparation de ladite composition liquide anti-agglomérante, ledit au moins un produit de saponification est dilué dans l'eau à des concentrations comprises entre 10 % et 40 % en poids.

5. Procédé selon l'une quelconque des revendications précédentes, **caractérisé en ce que** ladite quantité prédéterminée de ladite composition liquide anti-agglomérante pulvérisée sur lesdits granulés à ladite étape de pulvérisation varie en poids entre 0,8 % et 4,5 % du poids total desdits granulés.

6. Procédé selon l'une quelconque des revendications précédentes, **caractérisé en ce que**, à ladite étape de pulvérisation, une quantité dudit au moins un produit de saponification variant en poids entre 0,1 % et 1 % du poids total desdits granulés est pulvérisée sur lesdits granulés au moyen de ladite composition liquide anti-agglomérante.

7. Procédé selon l'une quelconque des revendications précédentes, **caractérisé en ce que** ladite étape de pulvérisation de ladite composition liquide anti-agglomérante sur lesdits granulés de polymère est exécutée simultanément avec une étape de formation dudit polymère en granulés.

8. Procédé selon la revendication 7, **caractérisé en ce que** ladite étape de formation dudit polymère en granulés est exécutée au moyen d'un dispositif de coupe situé à une tête d'extrudeuse pour extruder ledit polymère ; ladite composition liquide anti-agglomérante étant pulvérisée sur lesdits granulés immédiatement en aval dudit dispositif de coupe, à une température inférieure à la température à laquelle lesdits granulés sortent de ladite tête d'extrudeuse, de telle sorte que lesdits granulés sont refroidis par la pulvérisation avec ladite composition liquide anti-agglomérante.

9. Procédé selon la revendication 8, **caractérisé en ce que** ladite étape de pulvérisation de ladite composition liquide anti-agglomérante sur lesdits granulés de polymère est suivie d'une autre étape de refroidissement desdits granulés.

10. Utilisation d'une composition pour conférer des propriétés anti-agglomérantes à un polymère en granulés, **caractérisée en ce que** ladite composition est une composition liquide constituée essentiellement par au moins un produit de saponification d'un acide gras avec au moins un agent de saponification et au moins un solvant liquide dans lequel ledit au moins un produit de saponification est dissous.

11. Utilisation selon la revendication 10, **caractérisée en ce que** ledit au moins un acide gras est un acide gras saturé ou insaturé avec plus de 10 atomes de carbone ; ledit agent de saponification étant un agent basique.

12. Utilisation selon la revendication 10 ou 11, **caractérisée en ce qu'**elle comprend des produits de saponification correspondants dudit au moins un agent de saponification avec un mélange d'acides gras saturés et/ou insaturés avec plus de 10 atomes de carbone ; lesdits produits de saponification étant dissous à une concentration prédéterminée dans ledit au moins un solvant liquide.

13. Utilisation selon les revendications 10 à 12, **caractérisée en ce que** ledit au moins un produit de saponification est dissout dans de l'eau à une concentration comprise entre 10 % et 40 % en poids.

14. Utilisation selon la revendication 12 ou 13, caractérisée en ce ledit mélange d'acides gras comprend des acides gras saturés choisis dans le groupe comprenant de l'acide dodécanoïque, de l'acide tétradécanoïque, de l'acide hexadécanoïque, de l'acide octadécanoïque.

15. Utilisation selon la revendication 14, **caractérisée en ce que** ledit mélange d'acides gras comprend également au moins un acide gras insaturé, de préférence l'acide octadécanoïque.

16. Utilisation selon les revendications 12 à 15, **caractérisée en ce qu'**elle est obtenue à partir d'une solution aqueuse comprenant d'environ 1% à environ 10 % en poids - par rapport au poids total de ladite solution aqueuse - d'agent de saponification ; d'environ 1 % à environ 15 % en poids d'acide dodécanoique ; d'environ 0,5 % à environ 4 % en poids d'acide tétradécanoïque ; d'environ 0,1 % à environ 1 % en poids d'acide hexadécanoïque ; d'environ 0,7 % à environ 7 % en poids d'acide octadécanoïque ; et d'environ 1 % à environ 10 % en poids d'acide octadécanoique insaturé.

17. Utilisation selon les revendications 10 à 16, caractérisée en ce ledit au moins un agent de saponification est choisi dans le groupe comprenant : hydroxyde de sodium ; hydroxyde de potassium ; borax ; amines organiques secondaires ou tertiaires ; amines avec au moins un groupe hydroxyle.
